# EUROPEAN PATENT APPLICATION

(11) **EP 2 687 715 A1**
(43) Date of publication of application: **22.01.2014**
(21) Application number: 12758102.3
(22) Date of filing: 15.03.2012
(51) Int. Cl.: F03B 11/00, F16J 15/30

(54) **UNDERWATER HYDRO TURBINE GENERATOR**

(30) Priority: 16.03.2011 JP 2011058161
(71) Applicant: Eagle Industry Co., Ltd., Minato-ku Tokyo 105-8587 (JP)
(72) Inventor: KASHIWAMURA Shigeki, Hiroshima-shi, Hiroshima 730-8701 (JP); KATO Hiroshi, Hiroshima-shi, Hiroshima 730-8701 (JP); TANI Kimihiro, Tokyo 105-8587 (JP); ANAZAWA Takamitsu, Tokyo 105-8587 (JP); IIKAWA Kazuhiro, Tokyo 105-8587 (JP); TANAKA Tadachika, Higashihiroshima-shi, Hiroshima 739-0151 (JP)
(74) Representative: Grosse, Felix Christopher
(86) International application number: PCT/JP2012/056634
(87) International publication number: WO 2012/124755

(57) **Abstract**

Provided is an underwater water turbine generator that comprises a shaft-sealing device that does not require a lubricant and can rotate at high speed. A first sealing unit 110 of a shaft-sealing device 100 that performs shaft sealing between a water turbine chamber 40 and a generator chamber 50 includes a first rotating ring 112 that is arranged on the side of the water turbine chamber and fixed to a rotating shaft member, a first fixed ring 114 that is arranged on the side of the generator chamber and fixed to a casing 10, and an urging member (116) that urges the first fixed ring to the first rotating ring. One of the first rotating ring and the first fixed ring is a pressureless sintered SiC sliding member, and the other one is a carbon-SiC sliding member in which a part of carbon in a surface layer is changed to SiC. A second sealing unit 150 includes a second rotating ring 152 that is arranged on the side of the water turbine chamber and fixed to the rotating shaft member and a second fixed ring 154 that is arranged on the side of the generator chamber to slide-contact the second rotating ring. One of the second rotating ring and the second fixed ring is a pressureless sintered SiC sliding member, and the other one is a carbon sliding member.

## Description

### Technical Field

The present invention relates to a hydraulic power-generating device that rotationally drives a water turbine with water power to drive a rotor of a generator integrated with a rotating shaft of the water turbine, thereby obtaining electrical energy. More particularly, the present invention relates to an underwater water turbine generator in which a shaft sealing chamber part that is arranged for preventing entering of water from the side of a water turbine chamber that is put in water and contacts river water into the side of a generator chamber that accommodates the generator is kept in a dry environment.

### Background Art

Among hydraulic power-generating devices, particularly an underwater water turbine generator includes a casing, a rotating unit that is rotatably arranged in the casing, and a generator. The underwater water turbine generator rotates the rotating unit with energy of a fluid flowing from outside into the casing to activate the generator, thereby obtaining electrical energy.

The casing includes a water turbine chamber that is arranged on one end side in an axial direction, accommodates a water turbine, and is put in water to contact river water, a generator chamber that is arranged on the other end side in the axial direction and accommodates the generator, and a shaft sealing chamber that is arranged between the water turbine chamber and the generator chamber and accommodates a shaft-sealing device that blocks entering of a fluid from the water turbine chamber into the generator chamber. The rotating unit includes a single rotating shaft member that extends through the water turbine chamber, the shaft sealing chamber, and the generator chamber and that is shaft-supported so as to be relatively rotatable with respect to the casing.

A mechanical seal that includes a rotating ring that is fixed to the rotating shaft member to rotate therewith and a fixed ring that is fixed to the casing and slide-contacts the rotating ring is used in the shaft-sealing device. Two mechanical seals that hermetically seal between the water turbine chamber and the shaft sealing chamber and between the shaft sealing chamber and the generator chamber, respectively, are arranged. Conventionally, most of the mechanical seals reduce wear and heat generation between slide-contact surfaces of the rotating ring and the fixed ring by sealing a lubricant (such as oil) into the shaft sealing chamber, more specifically, between two mechanical seals. However, if the lubricant leaks from the shaft sealing chamber to the side of the water turbine chamber, environmental pollution or environmental destruction may occur. Therefore, it is desirable to use a dry-type mechanical seal without using a lubricant.

For example, Patent Document 1 describes an invention of the dry-type mechanical seal without using a lubricant.

### Prior Art Document

### Patent Document

Patent Document 1: Japanese Utility Model Application Laid-Open No. 5-027433

### Summary of the Invention

### Problems to be Solved by the Invention

However, the mechanical seal described in Patent Document 1 is used for a stirrer, a blower, and the like used in the food and chemical industry fields, and designed assuming that the mechanical seal is used in a device with a small number of rotations. Accordingly, the mechanical seal cannot be used in a device with a large number of rotations, that is, with hundreds to two thousand rotations per minute, such as a water turbine generator.

If the mechanical seal described Patent Document 1 is applied to a water turbine generator and the water turbine generator is operated to keep the inside of a shaft sealing chamber in a dry environment, the temperature of a slide-contact surface of the mechanical seal is increased by friction, so that the mechanical seal may be deteriorated or broken.

The present invention has been achieved in view of the above problems, and an object of the invention is to provide a water turbine generator that includes a shaft-sealing device that can address high speed rotations without using a lubricant.

### Means for Solving the Problem

To achieve the above object, an invention according to a first aspect is an underwater water turbine generator that comprises a casing, a rotating unit that is rotatably arranged in the casing, and a generator, and that rotates the rotating unit with energy of a fluid flowing from outside into the casing, thereby activating the generator, wherein the casing includes a water turbine chamber that has an introducing part that is arranged on one end side in an axial direction and introduces the fluid therein, and a discharging part that externally discharges the fluid introduced from the introducing part, a generator chamber that is arranged on the other end side in the axial direction and accommodates the generator, and a shaft sealing chamber that is arranged between the water turbine chamber and the generator chamber and accommodates a shaft-sealing device that blocks entering of the fluid from the water turbine chamber into the generator chamber, the rotating unit includes a single rotating shaft member that is extended through the water turbine chamber, the shaft sealing chamber, and the generator chamber and that is shaft-supported so as to be relatively rotatable with respect to the casing, and blades that are provided on the rotating shaft member and rotate the rotating shaft member with the fluid introduced from the introducing part, the generator includes a rotor that is fixed to the rotating shaft member, and a stator that is fixed to an inner wall of the casing, facing the rotor, the shaft-sealing device includes a first sealing unit, and a second sealing unit that is arranged nearer a side of the generator chamber than the first sealing unit, the first sealing unit includes a first rotating ring that is arranged on a side of the water turbine chamber and fixed to the rotating shaft member, a first fixed ring that is arranged on a side of the generator chamber and fixed to the casing to slide-contact the first rotating ring, and an urging member that urges the first fixed ring to the first rotating ring, one of the first rotating ring and the first fixed ring being a pressureless sintered SiC sliding member and the other one being a carbon-SiC sliding member in which a part of carbon in a surface layer is changed to SiC, and the second sealing unit includes a second rotating ring that is arranged on a side of the water turbine chamber and fixed to the rotating shaft member, and a second fixed ring that is arranged on a side of the generator chamber and fixed to the casing to slide-contact the second rotating ring, one of the second rotating ring and the second fixed ring being a pressureless sintered SiC sliding member and the other one being a carbon sliding member.

An invention according to a second aspect is the underwater water turbine generator according to the first aspect, wherein the first rotating ring is a pressureless sintered SiC sliding member and the first fixed ring is a carbon-SiC sliding member.

An invention according to a third aspect is the underwater water turbine generator according to the first or second aspect, wherein the second fixed ring is a carbon sliding member and the second rotating ring is a pressureless sintered SiC sliding member.

According to the inventions of the first to third aspects, the fixed ring and the rotating ring of the first sealing unit arranged on the side of the water turbine are a combination of a pressureless sintered SiC sliding member and a carbon-SiC sliding member in which a part of carbon in the surface layer is changed to SiC and both of them are hard materials. Accordingly, even when slurry such as earth, sand, and gravel contained in river water enters slide-contact surfaces of the fixed ring and the rotating ring, wear of the surfaces can be reduced.

The fixed ring and the rotating ring of the second sealing unit arranged on the side of the generator are a combination of a pressureless sintered SiC sliding member and a carbon sliding member, thereby providing a combination of a hard material and a soft material. Accordingly, it is possible to prevent a sliding resistance and wear even in a dry environment using no lubricant.

An invention according to a fourth aspect is the underwater water turbine generator according to any one of the first to third aspects, wherein gas is sealed in the shaft sealing chamber at an atmospheric pressure.

According to the invention of the fourth aspect, a lubricant such as lubricating oil is not sealed in the shaft sealing chamber and accordingly environmental destruction caused by lubricant leakage can be prevented. Further, because the lubricant such as lubricating oil is not sealed in the shaft sealing chamber, the entire shaft sealing chamber can be used as a space for temporarily storing river water that has entered from the first sealing unit. Therefore, the maintenance interval of the underwater water turbine generator that includes an operation of discharging entered water can be extended.

### Effects of the Invention

According to the present invention, the first sealing unit is formed of a combination of hard materials and the second sealing unit is formed of a combination of a hard material and a soft material. Therefore, it is possible to prevent deterioration and breakage of a seal when an operation is performed in a dry environment using no lubricant. Further, because the operation is possible in the dry environment, outflow of substances that may destroy the environment can be prevented, and the maintenance interval of the underwater water turbine generator can be extended.

### Brief Description of the Drawings

Fig. 1 is a partially cross-sectional schematic diagram showing an entire hydraulic power-generating device according to the present invention.
Fig. 2 is an enlarged cross-sectional diagram of a shaft sealing chamber part of the hydraulic power-generating device according to the present invention.
Fig. 3 is a cross-sectional diagram of a shaft-sealing device according to the present invention.

### Best Mode for Carrying Out the Invention

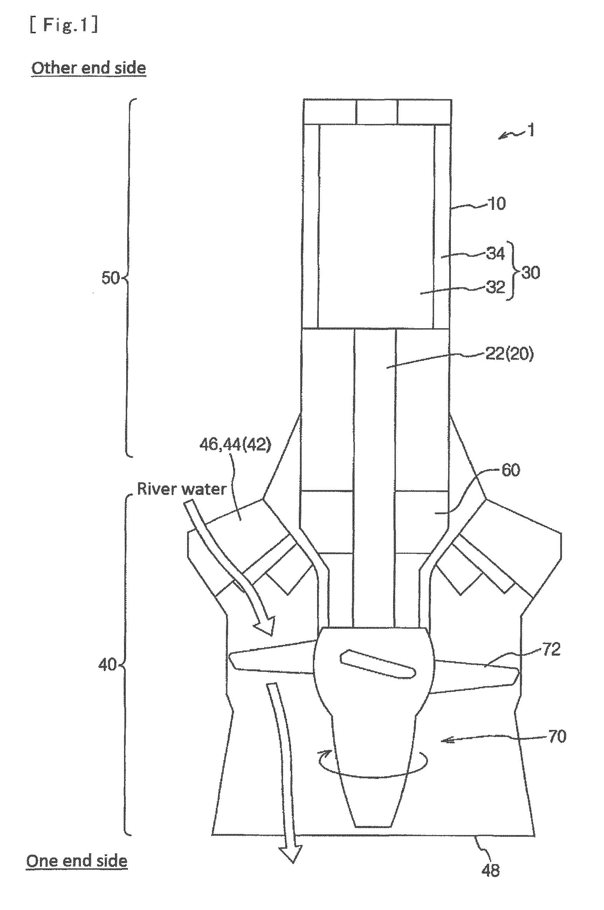

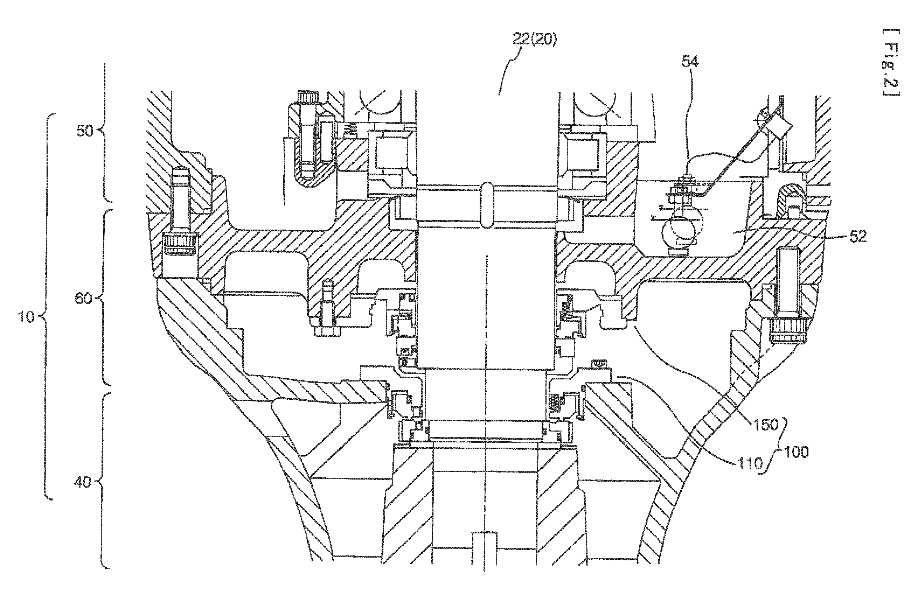

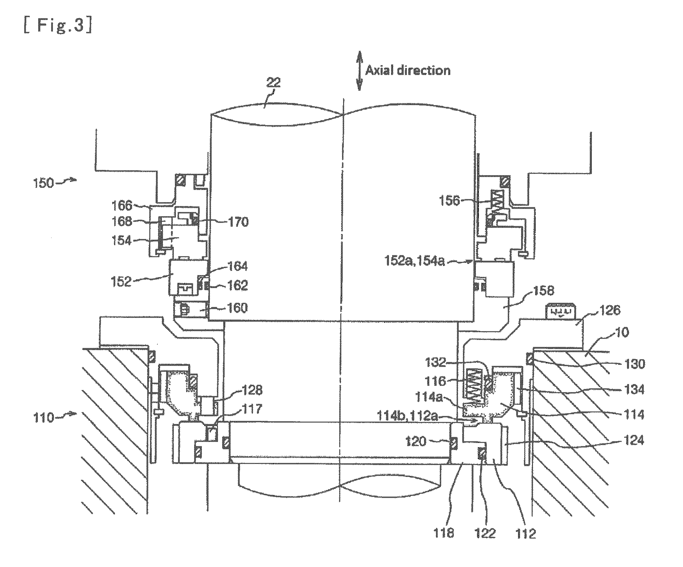

An embodiment of the present invention is explained below with reference to Figs. 1 to 3. Fig. 1 is a partially cross-sectional schematic diagram showing an entire hydraulic power-generating device according to the present invention. Fig. 2 is an enlarged cross-sectional diagram of a shaft sealing chamber part. Fig. 3 is a cross-sectional diagram of a shaft-sealing device. The hydraulic power-generating device according to the present invention is characterized by arranging a tandem mechanical seal in a shaft sealing chamber that performs shaft sealing between a water turbine chamber put in water and a generator chamber having a generator accommodated therein and by keeping the shaft sealing chamber in a dry environment without sealing a lubricant such as oil therein.

A hydraulic power-generating device 1 (underwater water turbine generator) includes a casing 10, a rotating unit 20 that is rotatably arranged in the casing 10, and a generator 30. The hydraulic power-generating device rotates the rotating unit 20 with energy of a fluid such as river water flowing from outside into the casing 10 to activate the generator 30, thereby obtaining electrical energy.

The casing 10 includes a water turbine chamber 40 that has an introducing part 42 that is arranged on one end side in an axial direction and introduces river water or the like therein and a discharging part 48 that externally discharges the river water introduced from the introducing part 42, a generator chamber 50 that is arranged on the other end side in the axial direction and accommodates the generator 30 therein, and a shaft sealing chamber 60 that is arranged between the water turbine chamber 40 and the generator chamber 50 and accommodates therein a shaft-sealing device 100 that blocks entering of the fluid from the water turbine chamber 40 into the generator chamber 50. The generator chamber 50 is maintained in a dry environment by the shaft-sealing device 100, and thus the entire hydraulic power-generating device 1 can be installed in water.

The rotating unit 20 includes a single rotating shaft member 22 that is extended through the water turbine chamber 40, the shaft sealing chamber 60, and the generator chamber 50 and that is shaft-supported so as to be relatively rotatable with respect to the casing 10.

A water turbine 70 that includes blades 72 that generate power for rotating the rotating shaft member 22 with a fluid pressure of the river water introduced from the introducing part 42 is accommodated in the water turbine chamber 40. The water turbine 70 is arranged on one end side of the rotating shaft member 22 in an axial direction. The blades 72 are radially arranged on the outer circumferential surface of the rotating shaft member 22 at a predetermined distance therebetween in a circumferential direction, fixed to the rotating shaft member 22, and integrated therewith.

The introducing part 42 includes guide vanes 44 that are formed in the substantially-cylindrical water turbine chamber 40 near the shaft sealing chamber 60 and guides river water to the blades 72, and an opening part 46 that is formed between the guide vanes 44. The guide vanes 44 are plate-like guide blades and arranged with the opening part 46 at a predetermined distance therebetween in the circumferential direction.

The generator 30 that includes a rotor 32 fixed to the rotating shaft member 22 and a stator 34 fixed to an inner wall of the casing 10 facing the rotor 32 is accommodated in the generator chamber 50. While the water turbine is directly coupled to the rotor in Fig. 1, the water turbine can be coupled to the rotor via a speed-increasing gear.

As shown in Fig. 1, while guided by the guide vanes 44, river water flows from the opening part 46 into the water turbine chamber 40. The fluid pressure of the river water acts on the blades 72, thereby rotating the rotating shaft member 22 and the rotor 32. The generator 30 uses electromagnetic induction between the rotating rotor 32 and the non-rotative stator 34 to generate electrical energy. The river water that has rotated the water turbine 70 is flown from the discharging part 48 outside the water turbine chamber 40.

As shown in Fig. 2, a storage unit 52 for storing river water leaked from the shaft sealing chamber 60 and an immersion-detecting float switch 54 that detects river water are arranged in the generator chamber 50 near the shaft sealing chamber 60. When river water enters the generator chamber 50 and then river water exceeding a certain amount is stored in the storage unit 52, the float switch 54 floats and a detection signal indicating that water leakage is detected is generated. A control device (not shown) that controls the operation of the entire hydraulic power-generating device 1 receives this detection signal and stops the generator 30.

The shaft-sealing device 100 that prevents entering of river water from the water turbine chamber 40 into the generator chamber 50 is arranged in the shaft sealing chamber 60. The inside of the shaft sealing chamber 60 is in a dry environment in which gas is sealed at an atmospheric pressure.

The shaft-sealing device 100 includes a first sealing unit 110 that performs shaft sealing between the water turbine chamber 40 and the shaft sealing chamber 60 and a second sealing unit 150 that performs shaft sealing between the shaft sealing chamber 60 and the generator chamber 50. Each of the sealing units is a mechanical seal having a fixed ring and a rotating ring. As shown in Fig. 3, the shaft-sealing device 100 includes a tandem mechanical seal having two mechanical seals being arranged in the same direction.

The first sealing unit 110 includes a first rotating ring 112 that is arranged on the side of the water turbine chamber 40 and fixed to the rotating shaft member 22, a first fixed ring 114 that is arranged on the side of the generator chamber 50 and fixed to the casing 10 to slide-contact the first rotating ring 112, and a first spring 116 (urging member) that elastically urges the first fixed ring 114 to the first rotating ring 112.

The first rotating ring 112 is formed of a pressureless sintered SiC sliding member (the hardness: Hs105 to 125) that is obtained by a general powder metallurgical process and contains 97% or more SiC. The pressureless sintered SiC sliding member is an acid-proof, alkali-proof, and slurry-proof silicon-carbide single body. The first rotating ring 112 is integrally fixed to the rotating shaft member 22 with a knock pin 117 via a first collar 118.

The first collar 118 is integrally fixed to the rotating shaft member 22. O-rings 120 and 122 formed of fluoro-rubber hermetically seal between the rotating shaft member 22 and the first collar 118 and between the first collar 118 and the first rotating ring 112, respectively. The first collar 118 has a step in a radial direction of the rotating shaft member 22, so that the axial thickness on the outer circumferential side is smaller than that on the side of the rotating shaft member 22 (the inner circumferential side). Because of such a step, positioning at the time of fitting the first rotating ring 112 into the first collar 118 can be easily performed. It is also possible to prevent a setting error at the time of assembling.

A titanium protection ring 124 that protects the first rotating ring 112 is press-fitted on an outer circumference of the first rotating ring 112 to prevent breakage of the first rotating ring 112.

The first fixed ring 114 is formed of a carbon-SiC sliding member that includes a gas-impervious surface layer 114a (a part marked with many dots in Fig. 3) having a thickness of 1.0 to 1.5 mm in which a part of carbon is changed to SiC (the hardness of the surface layer 114a: Hs80 to 95) . The carbon-SiC sliding member is a material that has a high thermal shock resistance and a high self-lubricating property due to carbon contained in the surface layer. In composition of the surface layer 114a, the content of carbon is higher than that of SiC. The rate of SiC in the surface layer 114a is 10 to 50% and preferably 20 to 25%. The rate of carbon in the surface layer 114a is 50 to 90% and preferably 75 to 80%.

The first fixed ring 114 has a slide-contact surface 114b that is annularly protruded and slide-contacts a slide-contact surface 112a of the first rotating ring 112. The first fixed ring 114 is fixed to the casing 10 and integrated therewith by a case 126 and a knock pin 128.

O-rings 130 and 132 formed of fluoro-rubber hermetically seal between the case 126 and the casing 10 and between the case 126 and the first fixed ring 114, respectively.

The first spring 116 that elastically urges the first fixed ring 114 to the side of the first rotating ring 112 is accommodated in the case 126, and the first fixed ring 114 is supported so as to be movable in the axial direction. By arranging the first spring 116 on the side of the first fixed ring 114 , it is possible to prevent the first spring 116 from being easily influenced by a centrifugal force and vibration resulting from the rotation of the rotating shaft member 22. Accordingly, the operation of the first spring 116 can be stabilized and breakage thereof can be prevented.

A titanium protection ring 134 that protects the first fixed ring 114 is press-fitted on an outer circumference of the first fixed ring 114 to prevent breakage of the first fixed ring 114.

There is river water around a part of the first sealing unit 110 on the side of the water turbine chamber 40, and slurry such as earth, sand, and gravel contained in the river water contacts the first rotating ring 112 and the first fixed ring 114. As explained above, because the first rotating ring 112 is formed of SiC and the surface layer 114a of the first fixed ring 114 includes Sic, a combination of hard members is provided. Accordingly, even when the slurry in river water enters between the slide-contact surface 112a and the slide-contact surface 114b, it is possible to prevent wear of the fixed ring and the rotating ring.

Further, because the protection rings 124 and 134 are arranged on the outer circumferential surfaces of the first rotating ring 112 and the first fixed ring 114, respectively, it is possible to prevent breakage of the fixed ring and the rotating ring when foreign matters mixed in river water contact the first rotating ring 112 or the first fixed ring 114.

Moreover, because the first spring 116 is arranged in the shaft sealing chamber 60, the first spring 116 is configured not to directly contact river water. Accordingly, it is possible to prevent the first spring 116 from being corroded by salt contained in river water and the like.

The second sealing unit 150 includes a second rotating ring 152 that is arranged on the side of the water turbine chamber 40 and fixed to the rotating shaft member 22, a second fixed ring 154 that is arranged on the side of the generator chamber 50 and fixed to the casing 10 to slide-contact the second rotating ring 152, and a second spring 156 (urging member) that urges the second fixed ring 154 to the second rotating ring 152.

Similarly to the first rotating ring 112, the second rotating ring 152 is formed of a pressureless sintered SiC sliding member. The second rotating ring 152 is integrally fixed to the rotating shaft member 22 via a second collar 158.

The second collar 158 is fixed to the rotating shaft member 22 and integrated therewith by a set screw 160. O-rings 162 and 164 formed of fluoro-rubber hermetically seal between the rotating shaft member 22 and the second collar 158 and between the second collar 158 and the second rotating ring 152, respectively. The second collar 158 has a step in the radial direction of the rotating shaft member 22. Accordingly, positioning at the time of fitting the second rotating ring 152 into the collar can be easily performed. Further, it is possible to prevent a setting error at the time of assembling.

The second fixed ring 154 is formed of a carbon sliding member. The second fixed ring 154 has a slide-contact surface 154a that is annularly protruded and slide-contacts a slide-contact surface 152a of the second rotating ring 152. The second fixed ring 154 is fixed to the casing 10 and integrated therewith by a case 166, a knock pin 168, and the like.

An O-ring 170 formed of fluoro-rubber hermetically seals between the case 166 and the second fixed ring 154.

The second spring 156 that elastically urges the second fixed ring 154 to the side of the second rotating ring 152 is accommodated in the case 166, and the second fixed ring 154 is supported so as to be movable in the axial direction. By arranging the second spring 156 on the side of the second fixed ring 154, it is possible to prevent the second spring 156 from being easily influenced by a centrifugal force and vibration resulting from the rotation of the rotating shaft member 22. Accordingly, the operation of the second spring 156 can be stabilized and breakage thereof can be prevented.

As explained above, there is no lubricant in the shaft sealing chamber 60 having the shaft-sealing device 100 being arranged therein. The shaft sealing chamber 60 is thus in a dry environment in which gas is sealed at the atmospheric pressure. At least substances other than solids and liquids, specifically, air, nitrogen gas, or other types of gas are sealed in the shaft sealing chamber 60. It is desirable that sealed gas is a substance that is harmless to humans and environments not to adversely affect the humans and the environments even if the gas is leaked. Particularly when air is sealed in the shaft sealing chamber 60, the hydraulic power-generating device 1 can be easily managed by the control device.

Because gas is sealed in the shaft sealing chamber 60, the entire shaft sealing chamber 60 serves as a storage tank that stores therein leaked water when river water enters from the first sealing unit 110 into the shaft sealing chamber 60. Accordingly, as compared to a case of sealing a lubricant in the shaft sealing chamber 60, the storage amount of leaked water can be increased and the checking period of the hydraulic power-generating device 1 that includes an operation of discharging leaked water can be extended.

The pressure within the shaft sealing chamber 60 needs to be lower than at least the pressure of the water turbine chamber 40. Because the water turbine chamber 40 is put in water and subjected to a water pressure, it generally suffices that the pressure within the shaft sealing chamber 60 is maintained at the atmospheric pressure. If the pressure condition has such a relation that "the pressure within the shaft sealing chamber 60 > the pressure within the water turbine chamber 40", a liquid film is lost on a sliding surface of the first sealing unit 110 that performs shaft sealing between the water turbine chamber 40 and the shaft sealing chamber 60, which leads to a dry operation, and thus the shaft-sealing device 100 may be broken.

According to the present embodiment, the second rotating ring 152 is a SiC sliding member and the second fixed ring 154 is a carbon sliding member, thereby providing a combination of a hard member and a soft member. Therefore, a sliding resistance in a dry environment can be reduced and heat generation due to friction can be reduced.

The hydraulic power-generating device 1 according to the present invention can be used as an underwater pump that pumps up river water and the like with power. For example, an electric motor-generator that can operate as both a generator and an electric motor can be used as the generator 30. By appropriately changing the rotating direction of the rotating shaft member 22 or the direction of the blades of the water turbine 70 and then inputting power to the device, pumping-up is possible.

Even when the electric motor-generator explained above is not used, an underwater pump that has an identical configuration as that of the hydraulic power-generating device 1 other than the generator can be manufactured by arranging an electric motor instead of the generator 30. In this case, an electric motor that includes a rotor and a stator is arranged in the pump and a starting device is connected thereto if necessary. Alternatively, an induction motor can be used as an electric motor.

### [Example]

The shaft-sealing device 100 explained above was manufactured and a simulation test was performed as follows. The hardness of the first rotating ring and the second rotating ring used in the actual device was Hs120, the hardness of the first fixed ring used in the actual device was Hs90, and the hardness of the second fixed ring used in the actual device was Hs92.

### Test of First sealing unit 110

### (a) Runaway speed test

[1] Assuming a runway rotation in the most severe operation condition, a test operation was performed at 1830 rpm for two hours. As a result, water leakage from the first sealing unit 110 and wear of the first rotating ring 112 and the first fixed ring 114 was not observed. When the slide-contact surface 112a and the slide-contact surface 114b were checked with the naked eye, problems were not particularly found and they were in a good condition.

### (b) Dry operation and thermal impact test

A thermal impact test in which a rapid temperature change was applied to the first sealing unit 110 in a range from 200°C to 20°C was performed.

When an operation was performed at 915 rpm for two hours in a completely dry condition, the temperature of the sealing unit was increased to 165°C. The operation was then performed at 915 rpm for two hours while the sealing unit was put in water at a temperature of 20°C to 30°C. It was confirmed that a thermal impact resistance after dry sliding was good and the amount of water leakage was 1 to 2.1 cc/h and also good.

### [2] Test of Second sealing unit 150

Assuming that the shaft sealing chamber 60 was filled with river water, a test was performed with the shaft sealing chamber 60 being filled with water and the side of the generator chamber 50 being in a dry state.

### (a) Runaway speed test

Assuming a runway rotation, a test operation was performed at 1830 rpm for two hours. Water leakage at 31.5 to 83 cc/h from the shaft sealing chamber 60 into the side of the generator chamber 50 was observed.

### (b) Rated operation test

Assuming a rated operation, a test operation was performed at 915 rpm for four hours. The amount of water leakage was reduced to 30 to 40% of that at the time of the runaway speed test.

### [3] Test of Shaft-sealing device 100

A test simulating an operation state of the hydraulic power-generating device 1 was performed. The test was performed under a condition that the pressure within the water turbine chamber 40 did not exceed 0.2 MPa. This is a design value of the hydraulic power-generating device 1 and corresponds to the pressure at a water depth of 20 m.

### (a) Test of start-up to rated operation

Assuming a state from start-up to a rated operation, an operation was performed with the number of rotations being gradually increased from 0 rpm to 735 rpm in 2.5 hours. As a result, water leakage from the first sealing unit 110 was not observed. When states of the slide-contact surfaces 112a, 114b, 152a, and 154a were visually checked with the naked eye, problems were not particularly found and they were in a good condition.

### (b) Load rejection test

Assuming a case where a load was rapidly lost because of an accident or other causes, a test in which the number of rotations was reduced in such a manner that 735 rpm => 1344 rpm => 0 rpm in three minutes was performed. As a result, water leakage from the first sealing unit 110 was not observed. When states of the slide-contact surfaces 112a, 114b, 152a, and 154a were visually checked with the naked eye, problems were not particularly found and they were in a good condition.

### Explanation Of the Codes

1... hydraulic power-generating device, 10...casing, 20... rotating unit, 22... rotating shaft member, 30...generator, 32...rotor, 34...stator, 40...water turbine chamber, 42...introducing part, 44...guide vane, 46...opening part, 48...discharging part, 50...generator chamber, 52...storage unit, 54...float switch, 60...shaft sealing chamber, 70...water turbine, 72...blade, 100...shaft-sealing device, 110...first sealing unit, 112...first rotating ring, 114 ... first fixed ring, 116 ... first spring, 118 ... first collar, 124...protection ring, 126...case, 128...knock pin, 134...protection ring, 150...second sealing unit, 152...second rotating ring, 154...second fixed ring, 156...second spring, 158...second collar, 166...case

## Claims

1. An underwater water turbine generator that comprises a casing, a rotating unit that is rotatably arranged in the casing, and a generator, and that rotates the rotating unit with energy of a fluid flowing from outside into the casing, thereby activating the generator, wherein
the casing includes a water turbine chamber that has an introducing part that is arranged on one end side in an axial direction and introduces the fluid therein, and a discharging part that externally discharges the fluid introduced from the introducing part, a generator chamber that is arranged on the other end side in the axial direction and accommodates the generator, and a shaft sealing chamber that is arranged between the water turbine chamber and the generator chamber and accommodates a shaft-sealing device that blocks entering of the fluid from the water turbine chamber into the generator chamber,
the rotating unit includes a single rotating shaft member that is extended through the water turbine chamber, the shaft sealing chamber, and the generator chamber and that is shaft-supported so as to be relatively rotatable with respect to the casing, and blades that are provided on the rotating shaft member and rotate the rotating shaft member with the fluid introduced from the introducing part,
the generator includes a rotor that is fixed to the rotating shaft member, and a stator that is fixed to an inner wall of the casing, facing the rotor,
the shaft-sealing device includes a first sealing unit, and a second sealing unit that is arranged nearer a side of the generator chamber than the first sealing unit,
the first sealing unit includes a first rotating ring that is arranged on a side of the water turbine chamber and fixed to the rotating shaft member, a first fixed ring that is arranged on a side of the generator chamber and fixed to the casing to slide-contact the first rotating ring, and an urging member that urges the first fixed ring to the first rotating ring, one of the first rotating ring and the first fixed ring being a pressureless sintered SiC sliding member and the other one being a carbon-SiC sliding member in which a part of carbon in a surface layer is changed to SiC, and
the second sealing unit includes a second rotating ring that is arranged on a side of the water turbine chamber and fixed to the rotating shaft member, and a second fixed ring that is arranged on a side of the generator chamber and fixed to the casing to slide-contact the second rotating ring, one of the second rotating ring and the second fixed ring being a pressureless sintered SiC sliding member and the other one being a carbon sliding member.

2. The underwater water turbine generator according to claim 1, wherein the first rotating ring is a pressureless sintered SiC sliding member and the first fixed ring is a carbon-SiC sliding member.

3. The underwater water turbine generator according to claim 1 or 2, wherein the second fixed ring is a carbon sliding member and the second rotating ring is a pressureless sintered SiC sliding member.

4. The underwater water turbine generator according to any one of claims 1 to 3, wherein gas is sealed in the shaft sealing chamber at an atmospheric pressure.
